**Europäisches Patentamt**

**European Patent Office**

**Office européen des brevets**

(19)

(11) Publication number : **0 490 844 A1**

(12) # EUROPEAN PATENT APPLICATION

(21) Application number : **91850272.5**

(22) Date of filing : **07.11.91**

(51) Int. Cl.⁵ : **F16L 17/06, F04D 29/40**

(30) Priority : **12.12.90 SE 9003965**

(43) Date of publication of application :
**17.06.92 Bulletin 92/25**

(84) Designated Contracting States :
**AT DE DK FR GB IT**

(71) Applicant : **ITT Flygt Aktiebolag**
**Box 1309**
**S-171 25 Solna (SE)**

(72) Inventor : **Brandt, Beng-Ake**
**Högklintav 29**
**S-172 38 Sundbyberg (SE)**
Inventor : **Ljungberg, Henrik**
**Erik Dahlbergsg 23**
**S-115 32 Stockholm (SE)**
Inventor : **Clefberg, Erik**
**Postiljonsv 33**
**S-122 47 Enskede (SE)**

(74) Representative : **Larsson, Sten**
**ITT FLYGT AB Box 1309**
**S-171 25 Solna (SE)**

(54) **A device for obtaining a sealing between two pipe formed connection devices.**

(57)    A device for obtaining a sealing between two opposite flanges on a submersible pump unit and an outlet pipe. One of the flanges (1) is provided with a cirkular groove (3) around the opening, which groove contains a seal ring (4) with two lips of an elastic material. The pump pressure presse one lip (4b) into contact with the other flange (2).

Fig.2

EP 0 490 844 A1

Jouve, 18, rue Saint-Denis, 75001 PARIS

A device for obtaining a sealing between two pipe formed connection devices between a submersible pump unit and an outlet pipe.

The invention concerns a seal device for a pump unit submersed in liquid including a water tight enclosed motor and a pump with an outlet provided with a flange.

Pump units, which are meant to operate entirely or partly submersed in liquid, are difficult to overhaul if the unit is fixed to the outlet pipe. In order to solve this problem it is known practice to arrange the pump unit to be lowered along guides so directed that the pump unit, when placed in its lower position, has its outlet in contact with a fixed outlet pipe for the pumped liquid. The pump outlet must then be sealingly attached to the outlet pipe without being fixed with screws or the like.

These known devices thus allow the pump unit to be easily taken up from the liquid for overhaul, but certain problems may arise concerning the sealing between the pump unit and the outlet pipe. During operation of the pump, a force is established which tries to part the two connection devices.

This problem has up to now been solved by designing the connection in such a way that gravity acting on the pump unit has overcome the mentioned reaction force. An example of such a solution is shown in the Swedish Patent No 163 212.

Another way to solve the problem is to arrange an elastic bellows in the pump outlet, the free end of which is brought into contact with the flange of the outlet at pump start. Such a device is shown in the Swedish Patent No 366 104. A disadvantage with this device is that the front end of the bellows goes beyond the end of the pump outlet flange and thus can be damaged between the two flanges when the pump unit is mounted, as said flanges move in parallel at the end phase of the mounting. For this reason it is neither suitable to arrange an elastic seal ring between the two flanges as such a ring is easily moved or perhaps damaged during mounting of the pump unit.

According to the invention a device has been obtained which in a simple and effective way solves the problem to seal two flanges. The invention is also characterized in that the device will not be damaged if the two flanges should rub against each other and that it is easily replaceable.

The invention is described more clearly below with reference to the enclosed drawings.

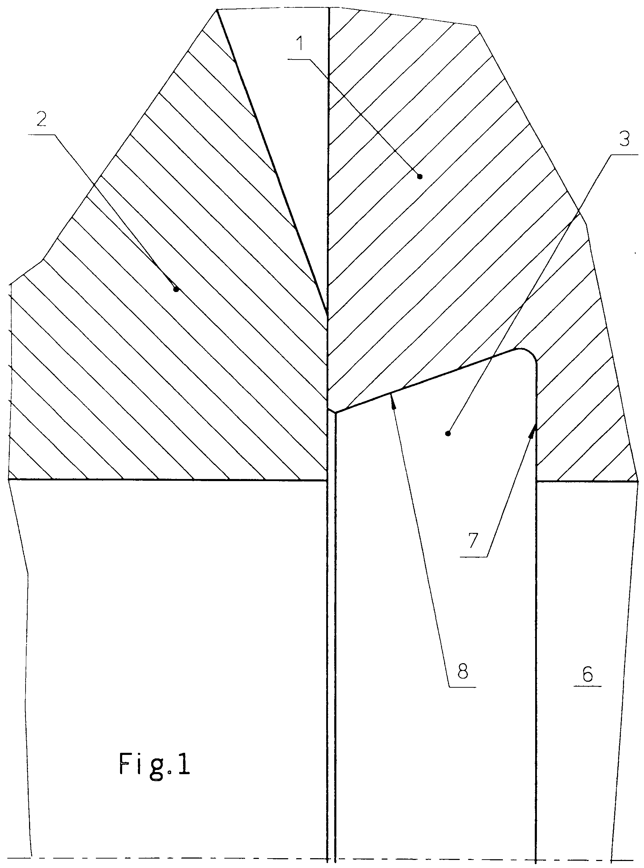

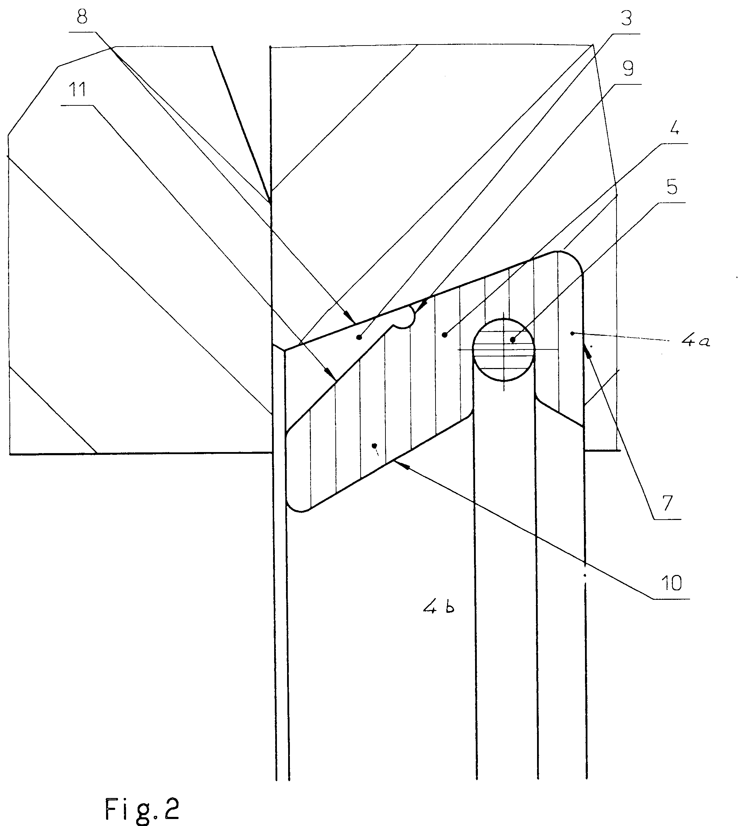

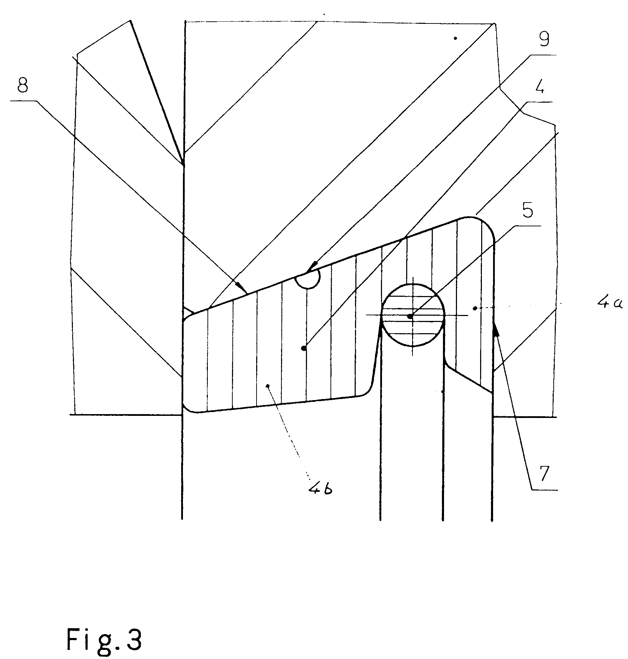

Fig 1 shows a pair of flanges without any elastic seal ring. Fig 2 shows the same pair of flanges with the seal device mounted and in rest position, while Fig 3 shows the device in operating position.

In the drawings 1 and 2 stand for flanges and 3 a groove in flange 1. 4 stands for an elastic seal ring with inner and outer lips 4a and 4b resp 5 stand for a ringformed spring, 6 a pressure pipe, 7 and 8 the side walls of the groove 3, 9 a notch in the lip 4 b and 10 and 11 surfaces on the latter.

As is shown in Fig 1 a groove 3 is cut in the flange 1 on a surface heading the surface of the other flange 2. In the groove there is a seal ring 4, Fig 2, of an elastic material and which is kept in the groove by gluing or by a slotted ringformed spring 5, which expands the seal ring towards the cylindric surface of the groove. In order to make it easier to keep the seal ring in its place during mounting, the cylindric surface has an angle so that the groove has less diameter at the entrance. The angle may vary from a few grades up to about 30 grades. A steeper angle means manufacturing problems.

The seal ring 4 comprises two lips 4a and 4b which contact the bottom of the groove and its cylindric surface resp. In its rest position, Fig 2, one of the lips 4a contact the bottom of the groove, while the other lip 4b is directed inwards and forwards in such a way that it is entirely kept within the groove 3, not sticking out beyond the end surface of the flange1. In this way the lip will not be damaged by the other flange 2 during mounting.

When the pump unit starts to operate, a high pressure is immediately created in the pipe 6. This pressure presses the lip 4b outwards in the direction of the cylindric part of the groove, the end of the lip being pressed against the other flange 2 thus obtaining a sealing between the two flanges 1 and 2.

In order to secure that the lip 4a is pressed outwards during the pressure increase, the surface 10 heading inwards is wider than the opposing surface 11. This means that the lip moves outwards, even if the pressure initially is the same on both sides of the lip. In order to further facilitate the contact with the cylindric surface, there is a notch 9 in the outer surface 11.

The pressure which presses the lip 4b against the cylindric surface and the opposing flange 2 increases with the pump pressure, which means that a good sealing is always obtained. When the pump stops, the pressure decreases and the lip 4b returns to its initial, protected position within the groove 3.

In order to diminish the risk for erosion, the seal ring is so designed that it is smoothly adapted to the flanges without any pockets which may disturb the liquid flow. The seal ring is preferably extruded and has a profile with only a slight diameter difference which decreases the risk from a changing of its form when glued.

## Claims

1 A device for obtaining a sealing between two opposite flanges which form the connection between a submersible, easily disconnectable pump unit and a rigidly attached outlet pipe, which sealing device is brought to its sealing position at pump start, characterized in that the front end of one of the flanges (1) is provided with a circular groove (3) around its opening, said groove containing a seal ring (4) of elastic material, which in its rest position is entirely contained within said groove, said ring (4) comprising two lips (4a) and (4b)resp which form an angle between each other, one of said lips being pressed by the pump pressure into contact with the cylindric surface of the groove and into contact with the opposing flange (2) for obtaining a sealing between the two flanges (1) and (2).

**2** A device according to claim 1, characterized in that the cylindric surface of the groove (3) forms an angle of 3 to 30°, preferably 15 - 25°, with the center axis meaning that the entrance of the groove has a less diameter than the bottom of the groove.

**3** A device according to claim 1, characterized in that one of the lips (4a) of the ring (4) is pressed against the bottom of the groove (3).

**4** A device according to claim 1, characterized in that the inward surface (10) of the lip (4b) has a wider area than its outsward surface (11).

**5** A device according to claim 4, characterized in that a notch (9) is provided in the outward surface (11) of the lip (4b).

**6** A device according to claim 1, characterized in that the ring (4) is attached within the groove (3) by help of a ring formed spring (5).

**7** A device according to claim 1, characterized in that the ring (4) is attached within the groove (3) by help of glueing.

Fig.1

Fig.2

Fig.3

European Patent
Office

**EUROPEAN SEARCH REPORT**

Application number

EP 91850272.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.⁵) |
|---|---|---|---|
| Y | US-A- 979 433 (C.M. CLAY) *Page 1, column 2, lines 59-63; figure 1* | 1-3,6 7 | F 16 L 17/06 F 04 D 29/40 |
| Y | US-A-2 933 334 (A.J. DE MOUDE) *Figures 3, 4* | 1,6,7 | |
| Y | SE-B- 352 720 (OY E. SARLIN AB) *Figures 1, 3* | 1-3,6 7 | |
| Y | GB-A-2 121 502 (VETCO OFFSHORE INC.) *Page 2, lines 14-26; figure 3* | 6 | |
| Y | SE-B- 410 506 (FORSHEDA GUMMIFABRIK AB) *Page 3, lines 28-40; figure 1* | 6 | |
| Y | SE-B- 357 426 (AB SVENSKA FLÄKTFABRIKEN) *Page 3, Lines 7-8* | 7 | TECHNICAL FIELDS SEARCHED (Int. Cl.⁵)  F 04 D F 16 L |

The present search report has been drawn up for all claims

| Place of search | Date of completion of the search | Examiner |
|---|---|---|
| STOCKHOLM | 04-02-1992 | LINDHULT A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82